# EUROPEAN PATENT SPECIFICATION

(11) **EP 3 067 896 B1**
(45) Date of publication and mention of the grant of the patent: **04.07.2018**
(21) Application number: 14860444.0
(22) Date of filing: 21.10.2014
(51) Int. Cl.: G21C 9/004, G21C 15/18, G21C 19/307, G21D 1/02

(54) **COOLING SYSTEM FOR NUCLEAR REACTOR SUPPRESSION POOL**
KÜHLSYSTEM FÜR EIN KERNREAKTOR-DRUCKENTLASTUNGSBECKEN
SYSTÈME DE REFROIDISSEMENT POUR RÉSERVE D'EAU DE RÉDUCTION DE PRESSION DE RÉACTEUR NUCLÉAIRE

(30) Priority: 07.11.2013 JP 2013231085
(43) Date of publication of application: 14.09.2016
(73) Proprietor: HITACHI-GE NUCLEAR ENERGY, LTD., Hitachi-shi Ibaraki 317-0073 (JP)
(72) Inventor: KASHIYAMA Masaki, Hitachi-shi Ibaraki 317-0073 (JP); KUSHIMA Yukiko, Hitachi-shi Ibaraki 317-0073 (JP)
(74) Representative: Addiss, John William
(86) International application number: PCT/JP2014/077918
(87) International publication number: WO 2015/068563

(56) References cited:
- JP-A- H 024 169
- JP-A- H0 862 373
- JP-A- S5 596 497
- JP-A- H01 132 993
- JP-A- H03 245 088
- JP-A- 2002 257 972
- JP-A- 2012 230 059
- JP-A- 2013 036 921
- JP-U- S57 144 099

## Description

### Technical Field

The present invention relates to a cooling system of a reactor suppression pool, and particularly relates to a cooling system of a reactor suppression pool suitable to be used when an event surpassing a postulated initiating event occurs.

### Background Art

As a background art in this technical field, there exists a suppression pool water cleanup system disclosed in Patent Literature 1. In Patent Literature 1, there is disclosed a system in which suppression pool water stored in a suppression pool arranged in a reactor containment vessel in a reactor building forming a nuclear power plant is introduced into a filtration demineralizer installed in a fuel pool cooling and cleanup system through the suppression pool water cleanup system and the suppression pool water is cleaned up by the filtration demineralizer.

Incidentally, when a large-scale postulated initiating event such as a loss of coolant accident occurs in the nuclear power plant, a reactor coolant (steam) flows into the suppression pool from a reactor pressure vessel and the steam is condensed by the suppression pool to thereby reduce the pressure inside the reactor pressure vessel. The suppression pool water stored in the suppression pool is a water source for injecting water to the reactor, therefore, the reactor pressure vessel is cooled by injecting water from respective reactor injection systems. Accordingly, the suppression pool is in a high-temperature and high-pressure state, the suppression pool water is cooled by a residual heat removable system at that time, and sufficient safety measures are taken with respect to the above-described large-scale postulated initiating event.

JPH0862373 discloses a heat eliminating device of a reactor container that consists of a reactor coolant purifying system in which the pressure of a core water flowing from a recirculating loop connected to a reactor pressure vessel to an extracted core water piping is raised by a sucked water booster pump, cooled by a regenerative heat exchanger sucked water cooling part and a non-regenerative heat exchanger, sent to the feed piping to the reactor pressure vessel after being purified by a filter demineralizing device and set to a proper temperature by a regenerative heat exchanger sucked water heating part, and then returned to the reactor pressure vessel. The device has a piping for connecting a suppression pool to an extracted core water piping and a filtering and demineralizing device bypass piping, a regenerative heat exchanger sucked water heating part bypass piping, a discharged water booster pump provided to the piping, and electric valves provided on both sides of the discharge water booster pump.

### Citation List

### Patent Literature

Patent Literature 1: JP-A-3-255394

### Summary of Invention

### Technical Problem

However, in recent years, in the case where an event surpassing the postulated initiating event occurs and in the case where taken measures do not function due to some reasons, strengthening measures of defense in depth are taken from the viewpoint that the safety of nuclear should be secured.

Accordingly, it is necessary to diversify the cooling system of the suppression pool water for further improving a safety margin of nuclear. However, in the above Patent Literature 1, the cooling of the suppression pool water has not been considered at all.

The present invention has been made in view of the above problems, and an object thereof is to provide a cooling system of a reactor suppression pool capable of cooling suppression pool water and improving the safety of the reactor in the case where the event surpassing the postulated initiating event occurs, or in the case where cooling of the suppression pool water by the residual heat removable system does not function. Solution to Problem

According to the present invention there is provided a cooling system as specified in claim 1.

### Advantageous Effects of Invention

According to the present invention, there are advantages that cooling of the suppression water can be performed, the safety of the reactor is improved and the defense in depth is reinforced even in the case where the event surpassing the postulated initiating event occurs, or in the case where cooling of the suppression pool water by the residual heat removable system does not function.

### Brief Description of Drawings

[Fig. 1] Fig. 1 is a schematic configuration diagram showing Embodiment 1 of a cooling system of a reactor suppression pool according to the present invention.
[Fig. 2] Fig. 2 is a schematic configuration diagram showing Embodiment 2 of a cooling system of a reactor suppression pool according to the present invention.
[Fig. 3] Fig. 3 is a schematic configuration diagram showing Embodiment 3 of a cooling system of a reactor suppression pool according to the present invention.
[Fig. 4] Fig. 4 is a schematic configuration diagram showing Embodiment 4 of a cooling system of a reactor suppression pool according to the present invention.
[Fig. 5] Fig. 5 is a schematic configuration diagram showing Embodiment 5 of a cooling system of a reactor suppression pool according to the present invention.

### Description of Embodiments

Hereinafter, a cooling system of a reactor suppression pool according to an embodiment of the present invention will be explained with reference to the shown embodiments. In respective embodiments, the same numerals are used for the same components.

### Embodiment 1

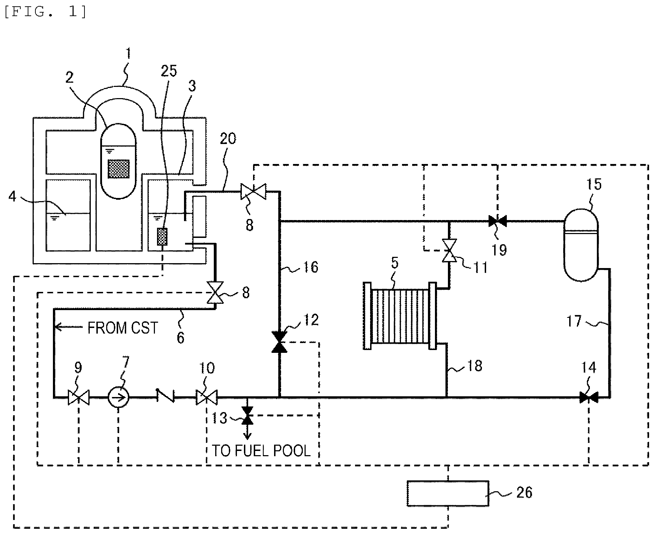

Fig. 1 shows Embodiment 1 of a cooling system of a reactor suppression pool according to the present invention.

In the drawing, 1 denotes a reactor containment vessel, a reactor 2 is housed in the reactor containment vessel 1 and a suppression pool 3 storing a suppression pool water 4 for suppressing the pressure increase inside the reactor containment vessel 1 is installed in a lower part of the reactor containment vessel 1.

The cooling system of the reactor suppression pool according to the embodiment includes a suppression pool water cleanup system suction line 6 sucking the suppression pool water 4 from the suppression pool 3 and allows the water to flow for cleaning up the suppression water 4 stored in the suppression pool 3, a suppression pool water cleanup system pump 7 installed in the middle of the suppression pool water cleanup system suction line 6, a fuel pool cooling and cleanup system line 17 one end of which is connected to the suppression pool water cleanup system suction line 6, a filtration demineralizer 15 installed in the middle of the fuel pool cooling and cleanup system line 17 and cleaning up the suppression pool water 4 flowing in the fuel pool cooling and cleanup system line 17, and a suppression pool water cleanup system discharge line 20 connected to the other end of the fuel pool cooling and cleanup system line 17 and returning the suppression pool water 4 cleaned up by the filtration demineralizer 15 to the suppression pool 3 for cleaning up the suppression pool water 4 stored in the suppression pool 3.

Suppression pool isolation valves 8 are installed in the suppression pool water cleanup system suction line 6 and the suppression pool water cleanup system discharge line 20, a suppression pool water cleanup system pump inlet valve 9 and a suppression pool water cleanup system pump outlet valve 10 are respectively installed on an inlet side and an outlet side of the suppression pool water cleanup system pump 7, a fuel pool cooling and cleanup system line inlet valve 14 and a fuel pool cooling and cleanup system line outlet valve 19 are respectively installed in the fuel pool cooling and cleanup system line 17 on an inlet side and an outlet side of the filtration demineralizer 15, and a fuel pool line inlet valve 13 which opens and closes a line to a fuel pool (not shown) is installed in the line.

The suppression pool water cleanup system suction line 6 and the suppression pool water cleanup system discharge line 20 are connected by a suppression pool water cleanup system surveillance line 16 used at the time of performing a performance validation test of the suppression pool water cleanup system pump 7, and a suppression pool water cleanup system surveillance line valve 12 is provided in the middle of the suppression pool water cleanup system surveillance line 16.

In the embodiment, there is formed a suppression pool water cooling line 18 one end of which is connected to a line connecting between the suppression pool water cleanup system suction line 6 and the fuel pool cooling and cleanup system line 17 on the inlet side to the filtration demineralizer 15, and the other end of which is connected to a line connecting between the fuel pool cooling and cleanup system line 17 on the outlet side to the filtration demineralizer 15 and the suppression pool water cleanup system discharge line 20, and there is provided a heat exchanger for cooling suppression pool water 5 installed in the middle of the suppression pool water cooling line 18, operating when the temperature of the suppression pool water 4 reaches a given temperature, performing heat exchange with the suppression pool water 4 from the suppression pool water cleanup system suction line 6 and cooling the water, then, returning the cooled suppression pool water 4 to the suppression pool 3 through the suppression pool water cleanup system discharge line 20.

An outlet valve of the heat exchanger for cooling suppression pool water 11 is installed on the suppression pool water cooling line 18 on the outlet side of the heat exchanger for cooling suppression pool water 5.

It is preferable that the heat exchanger for cooling suppression pool water 5 is installed in a position which can be easily accessed from the outside of a reactor building (not shown).

Also in the embodiment, a temperature measuring device 25 for measuring the temperature of the suppression pool water 4 is installed in the suppression pool 3, and there is provided a controller 26, to which a signal is transmitted when the temperature measuring device 25 measures that the temperature of the suppression pool water 4 has reached the vicinity of the maximum use temperature (for example, 104°C) of the suppression pool 3. The controller 26 which has received the signal transmits a signal for opening the suppression pool isolation valves 8, the suppression pool water cleanup system pump inlet valve 9 and the outlet valve 10, and the outlet valve of the heat exchanger for cooling suppression pool water 11, a signal for closing the fuel pool cooling and cleanup system line inlet valve 14 and the outlet valve 19, the suppression pool water cleanup system surveillance line valve 12 and the fuel pool line inlet valve 13 and a signal for activating the suppression pool water cleanup system pump 7. The suppression pool water 4 inside the suppression pool 3 is sent to the heat exchanger for cooling suppression pool water 5 by opening/closing respective valves and by activating the suppression pool water cleanup system pump 7.

The suppression pool water 4 sent to the heat exchanger for cooling suppression pool water 5 is cooled by heat exchange with a coolant in the heat exchanger for cooling suppression pool water 5, and the cooled suppression pool water 4 is returned to the suppression pool 3 through the suppression pool water cleanup system discharge line 20.

The above-described opening and closing operations of respective valves and activation of the pump and so on may be performed by a control mechanism which can be also operated manually according to judgement of an operator.

According to the above embodiment, in the case where the event surpassing the postulated initiating event occurs or when the cooling of the suppression pool water 4 by the residual heat removal system does not function, the suppression pool water 4 can be cooled by the heat exchanger for cooling suppression pool water 5 installed on the suppression pool water cooling line 18, which improves safety of the reactor and reinforces the defense in depth.

### Embodiment 2

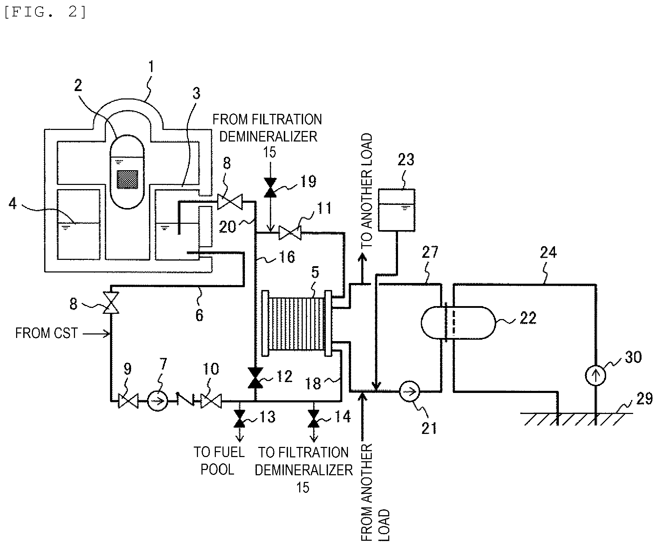

Fig. 2 shows Embodiment 2 of a cooling system of a reactor suppression pool according to the present invention.

The embodiment shown in Fig. 2 is an example of a system configuration in which heat of the suppression pool water 2 is exhausted to service water after performing heat exchange by using the heat exchanger for cooling suppression pool water 5 as in Embodiment 1.

The fuel pool cooling and cleanup system line 17, the filtration demineralizer 15, the temperature measuring device 25 and the controller 26 shown in Embodiment 1 are omitted in embodiments after Embodiment 2 (Fig. 2).

In the embodiment shown in the drawing, a reactor building closed cooling water system line 27 supplying a coolant (water) performing heat exchange with the suppression pool water 4 for cooling is connected to the heat exchanger for cooling suppression pool water 5. The reactor building closed cooling water system line 27 includes a reactor building closed cooling water system pump 21, a reactor building closed cooling water system heat exchanger 22 and a reactor building closed cooling water system surge tank 23. In the reactor building closed cooling water system heat exchanger 22, there is installed a reactor service water system line 24 pumping up a service water 29 by a reactor service water system pump 30 and performing heat exchange with a coolant by the reactor building closed cooling water system heat exchanger 22 to exhaust heat to the service water 29.

That is, when the cooling of the suppression pool water 4 is started as in Embodiment 1, it is necessary that the heat exchanger for cooling suppression pool water 5 performs heat exchange between the high-temperature suppression pool water 4 and the coolant. Therefore, the heat exchanger for cooling suppression pool water 5 is connected to the reactor building closed cooling water system line 27 including the reactor building closed cooling water system pump 21, the reactor building closed cooling water system heat exchanger 22 and the reactor building closed cooling water system surge tank 23 so that the coolant (water) flows therethrough. Furthermore, the reactor building closed cooling water system line 27 is connected to the reactor service water system line 24 using the service water 29 as a secondary coolant to thereby perform heat exchange between the coolant (water) and the service water 29 by the reactor building closed cooling water system heat exchanger 22.

According to the above embodiment, heat of the suppression pool water 4 is discharged to the service water 29, therefore, the same effects as Embodiment 1 can be obtained as well as stable cooling can be performed.

### Embodiment 3

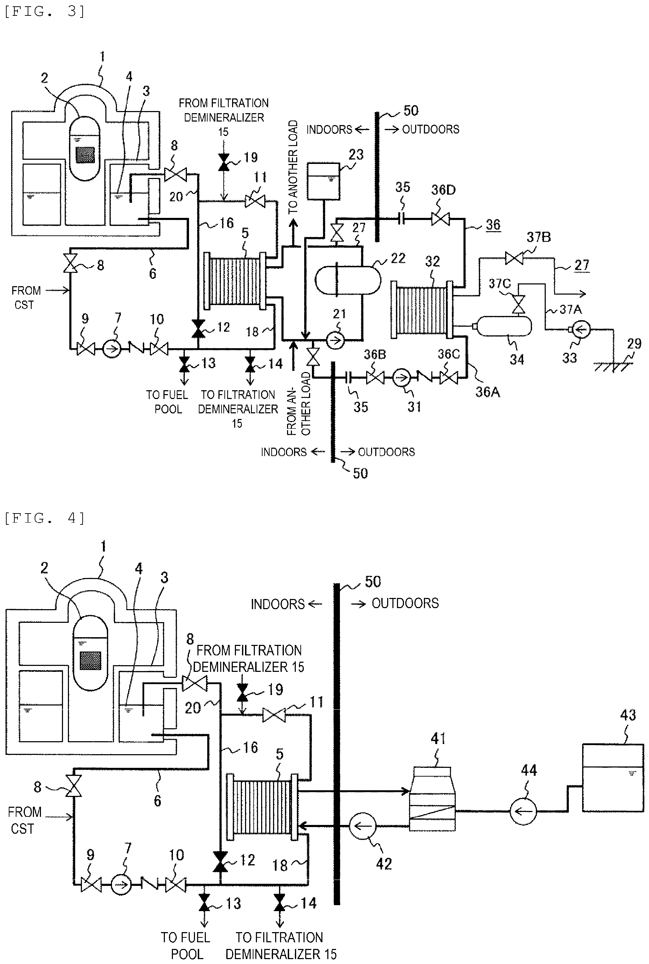

Fig. 3 shows Embodiment 3 of a cooling system of a reactor suppression pool according to the present invention.

The embodiment shown in Fig. 3 is an example of a system configuration in which cooling of the suppression pool 3 is performed stably in preparation for a case where the reactor building closed cooling water system line 27 and the reactor service water system line 24 used in Embodiment 2 are not able to be used due to some reasons.

In the embodiment shown in the drawing, an alternative reactor building closed cooling water unit 36 in the outside of a reactor building 50 is connected to the reactor building closed cooling water system line 27 through a reactor building outside flange 35 as well as provisional service water pump equipment 37 is connected to the alternative reactor building closed cooling water unit 36, in addition to the configuration of Embodiment 2.

The above alternative reactor building closed cooling water unit 36 is formed of a line including an alternative reactor building closed cooling water pump 31, an alternative reactor building closed cooling water heat exchanger 32, a pipe 36A connecting the above respective components and valves 36B, 36C and 36D. On the other hand, the provisional service water pump equipment 37 is formed of a line including a provisional service water pump 33, a provisional strainer 34, a pipe 37A connecting the above respective components and valves 37B and 37C.

Then, the coolant from the reactor building closed cooling water system line 27 is introduced to the alternative reactor building closed cooling water heat exchanger 32 by the alternative reactor building closed cooling water pump 31. The coolant introduced to the alternative reactor building closed cooling water heat exchanger 32 and the service water 29 pumped up by the provisional service water pump 33 and introduced to the alternative reactor building closed cooling water heat exchanger 32 through the provisional strainer 34 perform heat exchange, thereby exhausting the heat to the service water 29.

That is, the heat exchanger for cooling suppression pool water 5 is connected to the reactor building closed cooling water system line 27 according to Embodiment 2, the reactor building closed cooling water system line 27 is connected to the alternative reactor building closed cooling water unit 36 in the outside of the reactor building 50 and the alternative reactor building closed cooling water unit 36 is connected to the provisional service water pump equipment 37, thereby discharging the heat of the suppression pool water 4 in the suppression pool 3 into the service water 29.

According to the above embodiment, the same effects as Embodiment 2 can be obtained as well as stable cooling can be performed.

### Embodiment 4

Fig. 4 shows Embodiment 4 of a cooling system of a reactor suppression pool according to the present invention.

The embodiment shown in Fig. 4 is an example of a system configuration in which the heat of the suppression pool water 4 obtained by heat exchange using the heat exchanger for cooling suppression pool water 5 in Embodiment 1 is exhausted to the air by using a cooling tower cooling system.

That is, in the embodiment shown in the drawing, the cooling tower cooling system is connected to the heat exchanger for cooling suppression pool water 5, which is formed of a cooling tower 41 installed in the outside of the reactor building 50 for performing heat exchange between the suppression pool water 4 and a circulating water of the cooling tower cooling system in the heat exchanger for cooling suppression pool water 5, and a circulating pump 42 for circulating the circulating water of the cooling tower cooling system in a loop closed between the cooling tower 41 and the heat exchanger for cooling suppression pool water 5. Moreover, a makeup water source 43 which supplies makeup water to be vaporized for performing heat exchange with the circulating water of the cooling tower cooling system by latent heat of vaporization by vaporizing the makeup water by the cooling tower 41, and a makeup water pump 44 feeding the makeup water from the makeup water source 43 to the cooling tower 41 are connected to the cooling tower 41.

The suppression pool water 4 of the suppression pool 3 is cooled as the heat of the suppression pool water 4 is discharged to the air through the circulating water of the cooling tower cooling system and the cooling tower 41.

That is, the circulating water of the cooling tower cooling system is allowed to flow into the heat exchanger for cooling suppression pool water 5, thereby performing heat exchange with the suppression pool water 4, as a result, the heat of the suppression pool water 4 is discharged to the air through the circulation water of the cooling tower cooling system and the cooling tower 41.

According to the above embodiment, the same effects as Embodiment 1 can be obtained as well as stable cooling can be performed.

### Embodiment 5

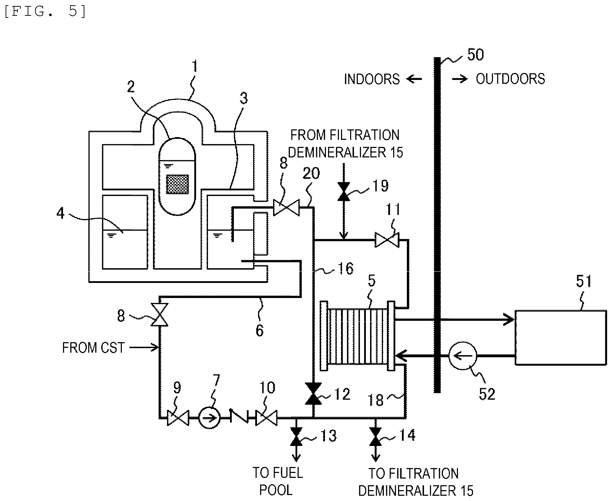

Fig. 5 shows Embodiment 5 of a cooling system of a reactor suppression pool according to the present invention.

The embodiment shown in Fig. 5 is an example of a system configuration in which the heat of the suppression pool water 4 obtained by heat exchange using the heat exchanger for cooling suppression pool water 5 in Embodiment 1 is exhausted to the air by using an air fin cooler cooling system.

That is, in the embodiment shown in the drawing, the air fin cooler cooling system is connected to the heat exchanger for cooling suppression pool water 5, which is formed of an air fin cooler 51 installed in the outside of the reactor building 50 for performing heat exchange with the air through the suppression pool water 4 and a circulating water of the air fin cooler cooling system in the heat exchanger for cooling suppression pool water 5, and a circulating pump 52 for circulating the circulating water of the air fin cooler cooling system in a loop closed between the air fin cooler 51 and the heat exchanger for cooling suppression pool water 5.

The suppression pool water 4 of the suppression pool 3 is cooled as the heat of the suppression pool water 4 is discharged to the air through the circulating water of the air fin cooler cooling system and the air fin cooler 51.

That is, the circulating water of the air fin cooler cooling system is allowed to flow into the heat exchanger for cooling suppression pool water 5, thereby performing heat exchange with the suppression pool water 4, as a result, the heat of the suppression pool water 4 is discharged to the air through the circulation water of the air fin cooler cooling system and the air fin cooler 51.

According to the above embodiment, the same effects as Embodiment 1 can be obtained as well as stable cooling can be performed.

The present invention is not limited to the above embodiments and various modification examples are included.

For example, the above embodiments have been explained in detail for clearly explaining the present invention, and are not always limited to embodiments including all explained components. It is possible to replace part of components of a certain embodiment with components of another embodiment as well as to add components of a certain embodiment to components of another embodiment. Also, addition, omission and replacement may occur in part of components in respective embodiments.

### Reference Signs List

1...reactor containment vessel, 2...reactor, 3...suppression pool, 4...suppression pool water, 5...heat exchanger for cooling suppression pool water, 6...suppression pool water cleanup system suction line, 7...suppression pool water cleanup system pump, 8...suppression pool isolation valve, 9...suppression pool water cleanup system pump inlet valve, 10...suppression pool water cleanup system pump outlet valve, 11...outlet valve of the heat exchanger for cooling suppression pool water, 12...suppression pool water cleanup system surveillance line valve, 13...fuel pool line inlet valve, 14...fuel pool cooling and cleanup system line inlet valve, 15...filtration demineralizer, 16...suppression pool water cleanup system surveillance line, 17...fuel pool cooling and cleanup system line, 18...suppression pool water cooling line, 19...fuel pool cooling and cleanup system line outlet valve, 20...suppression pool water cleanup system discharge line, 21...reactor building closed cooling water system pump, 22...reactor building closed cooling water system heat exchanger, 23...reactor building closed cooling water system surge tank, 24...reactor service water system line, 25...temperature measuring device, 26...controller, 27...reactor building closed cooling water system line, 29...service water, 30...reactor service water system pump, 31...alternative reactor building closed cooling water pump, 32...alternative reactor building closed cooling water heat exchanger, 33...provisional service water pump, 34...provisional strainer, 35...reactor building outside flange, 36...alternative reactor building closed cooling water unit, 36A, 37A...pipe, 36B, 36C, 36D, 37B, 37C...valve, 37...provisional service water pump equipment, 41...cooling tower, 42...circulating pump of cooling tower cooling system, 43...makeup water source, 44...makeup water pump, 50...reactor building, 51...air fin cooler, 52...circulating pump of air fin cooler cooling system

## Claims

1. A cooling system for cooling a suppression pool water (4) stored in a suppression pool (3) arranged in a reactor containment vessel (1) in which a reactor (2) is housed, the cooling system comprising:
a suppression pool water cleanup system suction line (6) for sucking the suppression pool water (4) from the suppression pool (3) and for allowing the water to flow;
a suppression pool water cleanup system pump (7) installed in the middle of the suppression pool water cleanup system suction line (6);
a fuel pool cooling and cleanup system line (17) one end of which is connected to the suppression pool water cleanup system suction line (6);
a filtration demineralizer (15) installed in the middle of the fuel pool cooling and cleanup system line (17) and configured to clean up the suppression pool water (4) flowing in the fuel pool cooling and cleanup system line (17);
a suppression pool water cleanup system discharge line (20) connected to the other end of the fuel pool cooling and cleanup system line (17) for returning the suppression pool water (4) cleaned up by the filtration demineralizer (15) to the suppression pool (3);
a suppression pool water cooling line (18) one end of which is connected to a line connecting between the suppression pool water cleanup system suction line (6) and the fuel pool cooling and cleanup system line (17) on an inlet side to the filtration demineralizer (15) and the other end of which is connected to a line connecting between the fuel pool cooling and cleanup system line (17) on an outlet side to the filtration demineralizer (15) and the suppression pool water cleanup system discharge line (20); and
a heat exchanger for cooling suppression pool water (5) installed in the middle of the suppression pool water cooling line (18), wherein the heat exchanger for cooling suppression pool water (5) is configured to operate when the temperature of the suppression pool water (4) reaches a given temperature, to perform heat exchange with the suppression pool water (4) from the suppression pool water cleanup system suction line (6) to cool the water, and to return the cooled suppression pool water (4) to the suppression pool (3) through the suppression pool water cleanup system discharge line (20).

2. The cooling system according to claim 1, further comprising:
a temperature measuring device (25) for measuring the temperature of the suppression pool water (4),
wherein the heat exchanger for cooling suppression pool water (5) is configured to operate when the temperature measuring device (25) measures that the temperature of the suppression pool water (4) has reached the vicinity of the maximum use temperature of the suppression pool (3).

3. The cooling system according to claim 2, further comprising:
suppression pool isolation valves (8) in the suppression pool water cleanup system suction line (6) and the suppression pool water cleanup system discharge line (20);
a suppression pool water cleanup system pump inlet valve (9) and a suppression pool water cleanup system pump outlet valve (10) on an inlet side and an outlet side of the suppression pool water cleanup system pump (7);
an outlet valve of the heat exchanger for cooling suppression pool water (5) on the suppression pool water cooling line (18) on an outlet side of the heat exchanger for cooling suppression pool water (5);
a fuel pool cooling and cleanup system line inlet valve (14) and a fuel pool cooling and cleanup system line outlet valve (19) in the fuel pool cooling and cleanup system line (17) on the inlet side and the outlet side of the filtration demineralizer (15); and
a controller (26) configured to open the suppression pool isolation valves (8), the suppression pool water cleanup system pump inlet valve (9) and the outlet valve and the outlet valve of the heat exchanger for cooling suppression pool water (5) and to close the fuel pool cooling and cleanup system line inlet valve (14) and the outlet valve when the temperature measuring device (25) measures that the temperature of the suppression pool water (4) has reached the vicinity of the maximum use temperature of the suppression pool (3).

4. The cooling system according to any one of claims 1 to 3,
wherein the suppression pool water cleanup system suction line (6) and the suppression pool water cleanup system discharge line (20) are connected by a suppression pool water cleanup system surveillance line (16) for use at the time of performing a performance validation test of the suppression pool water cleanup system pump (7), and
a suppression pool water cleanup system surveillance line valve (12) which is configured to be closed when the heat exchanger for cooling suppression pool water (5) operates is provided in the middle of the suppression pool water cleanup system surveillance line (16).

5. The cooling system according to any one of claims 1 to 4,
wherein a reactor building closed cooling water system line (27) supplying a coolant for performing heat exchange with the suppression pool water (4) for cooling is connected to the heat exchanger for cooling suppression pool water (5),
the reactor building closed cooling water system line (27) includes a reactor building closed cooling water system pump (21), a reactor building closed cooling water system heat exchanger (22) and a reactor building closed cooling water system surge tank (23), and
a reactor service water system line (24) for pumping up a service water (29) by a reactor service water system pump (30) and for performing heat exchange with the coolant by the reactor building closed cooling water system heat exchanger (22) to exhaust heat to the service water (29) is installed in the reactor building closed cooling water system heat exchanger (22) .

6. The cooling system according to claim 5,
wherein an alternative reactor building closed cooling water unit (36), in the outside of a reactor building (50) when in use, is connected to the reactor building closed cooling water system line (27),
provisional service water pump equipment (37) is connected to the alternative reactor building closed cooling water unit (36),
the alternative reactor building closed cooling water unit (36) is formed of a line including an alternative reactor building closed cooling water pump (31), an alternative reactor building closed cooling water heat exchanger (32), a pipe connecting the above respective components and valves, whereas, the provisional service water pump equipment (37) is formed of a line including a provisional service water pump (33), a provisional strainer (34), a pipe connecting the above respective components and valves,
the coolant from the reactor building closed cooling water system line (27) is introduced to the alternative reactor building closed cooling water heat exchanger (32) by the alternative reactor building closed cooling water pump (31), and
the configuration of the cooling system is such that the coolant introduced to the alternative reactor building closed cooling water heat exchanger (32) and the service water (29) pumped up by the provisional service water pump (33) and introduced to the alternative reactor building closed cooling water heat exchanger (32) through the provisional strainer (34) perform heat exchange, thereby exhausting the heat to the service water (29).

7. The cooling system according to any one of claims 1 to 4,
wherein a cooling tower cooling system is connected to the heat exchanger for cooling suppression pool water (5), which is formed of a cooling tower (41) installed outdoors for performing heat exchange between the suppression pool water (4) and a circulating water in the heat exchanger for cooling suppression pool water (5), and a circulating pump (42) for circulating the circulating water in a loop closed between the cooling tower (41) and the heat exchanger for cooling suppression pool water (5), and
the configuration of the cooling system is such that the suppression pool water (4) is cooled as the heat of the suppression pool water (4) is discharged to the air through the circulating water and the cooling tower (41).

8. The cooling system according to claim 7,
wherein a makeup water source (43) for supplying makeup water to be vaporized for performing heat exchange with the circulating water by latent heat of vaporization by vaporizing the makeup water by the cooling tower (41), and a makeup water pump (44) for feeding the makeup water from the makeup water source (43) to the cooling tower (41) are connected to the cooling tower (41).

9. The cooling system according to any one of claims 1 to 4,
wherein an air fin cooler cooling system is connected to the heat exchanger for cooling suppression pool water (5), which is formed of an air fin cooler (51) installed outdoors for performing heat exchange with the air through the suppression pool water (4) and a circulating water in the heat exchanger for cooling suppression pool water (5), and a circulating pump for circulating the circulating water in a loop closed between the air fin cooler (51) and the heat exchanger for cooling suppression pool water (5), and
the configuration of the cooling system is such that the suppression pool water (4) is cooled as the heat of the suppression pool water (4) is discharged to the air through the circulating water and the air fin cooler (51).

## Patentansprüche

1. Kühlsystem zum Kühlen von Druckentlastungsbeckenwasser (4), das in einem Druckentlastungsbecken (3) gespeichert ist, welches in einem Reaktorsicherheitsbehälter (1), in dem ein Reaktor (2) aufgenommen ist, angeordnet ist, wobei das Kühlsystem folgendes umfasst:
eine Druckentlastungsbeckenwasserreinigungssystemansaugleitung (6) zum Ansaugen des Druckentlastungsbeckenwassers (4) aus dem Druckentlastungsbecken (3) und um ein Strömen des Wassers zu ermöglichen;
eine Druckentlastungsbeckenwasserreinigungssystempumpe (7), die in der Mitte der Druckentlastungsbeckenwasserreinigungssystemansaugleitung (6) installiert ist;
eine Brennelementlagerkühl- und -reinigungssystemleitung (17), deren eines Ende mit der Druckentlastungsbeckenwasserreinigungssystemansaugleitung (6) verbunden ist;
ein Filtrationsentmineralisierungselement (15), das in der Mitte der Brennelementlagerkühl- und -reinigungssystemleitung (17) installiert und konfiguriert ist, um das in die Brennelementlagerkühl- und -reinigungssystemleitung (17) strömende Druckentlastungsbeckenwasser (4) zu reinigen;
eine Druckentlastungsbeckenwasserreinigungssystemauslassleitung (20), die mit dem anderen Ende der Brennelementlagerkühl- und -reinigungssystemleitung (17) verbunden ist, um das durch das Filtrationsentmineralisierungselement (15) gereinigte Druckentlastungsbeckenwasser (4) zurück in das Druckentlastungsbecken (3) zu führen;
eine Druckentlastungsbeckenwasserkühlungsleitung (18), deren eines Ende mit einer Leitung verbunden ist, die zwischen die Druckentlastungsbeckenwasserreinigungssystemansaugleitung (6) und die Brennelementlagerkühl- und -reinigungssystemleitung (17) mit einer Einlassseite des Filtrationsentmineralisierungselement (15) geschaltet ist, und deren anderes Ende mit einer Leitung verbunden ist, die zwischen die Brennelementlagerkühl- und -reinigungssystemleitung (17) an einer Auslassseite mit dem Filtrationsentmineralisierungselement (15) und die Druckentlastungsbeckenwasserreinigungssystemauslassleitung (20) geschaltet ist; und
einen Wärmetauscher zum Kühlen von Druckentlastungsbeckenwasser (5), der in der Mitte der Druckentlastungsbeckenwasserkühlungsleitung (18) installiert ist, wobei der Wärmetauscher zum Kühlen von Druckentlastungsbeckenwasser (5) konfiguriert ist, um zu arbeiten, wenn die Temperatur des Druckentlastungsbeckenwassers (4) eine gegebene Temperatur erreicht, um einen Wärmeaustausch mit dem Druckentlastungsbeckenwasser (4) aus der Druckentlastungsbeckenwasserreinigungssystemansaugleitung (6) zum Kühlen des Wassers durchzuführen und das gekühlte Druckentlastungsbeckenwasser (4) durch die Druckentlastungsbeckenwasserreinigungssystemauslassleitung (20) zum Druckentlastungsbecken (3) zurück zu führen.

2. Kühlsystem nach Anspruch 1, ferner umfassend:
eine Temperaturmessvorrichtung (25) zum Messen der Temperatur des Druckentlastungsbeckenwassers (4),
wobei der Wärmetauscher zum Kühlen von Druckentlastungsbeckenwasser (5) konfiguriert ist, um zu arbeiten, wenn die Temperaturmessvorrichtung (25) misst, dass die Temperatur des Druckentlastungsbeckenwassers (4) sich der maximalen Verwendungstemperatur des Druckentlastungsbeckens (3) nähert.

3. Kühlsystem nach Anspruch 2, ferner umfassend:
Druckentlastungsbeckenisolierventile (8) in der Druckentlastungsbeckenwasserreinigungssystemansaugleitung (6) und der Druckentlastungsbeckenwasserreinigungssystemauslassleitung (20);
ein Druckentlastungsbeckenwasserreinigungssystem-Pumpeneinlassventil (9) und ein Druckentlastungsbeckenwasserreinigungssystem-Pumpenauslassventil (10) auf einer Einlassseite und einer Auslassseite der Druckentlastungsbeckenwasserreinigungssystempumpe (7);
ein Auslassventil des Wärmetauschers zum Kühlen von Druckentlastungsbeckenwasser (5) auf der Druckentlastungsbeckenwasserkühlungsleitung (18) auf einer Auslassseite des Wärmetauschers zum Kühlen von Druckentlastungsbeckenwasser (5);
ein Brennelementlagerkühl- und -reinigungssystemleitungseinlassventil (14) und ein Brennelementlagerkühl- und -reinigungssystemleitungsauslassventil (19) in der Brennelementlagerkühl- und -reinigungssystemleitung (17) auf der Einlassseite und der Auslassseite des Filtrationsentmineralisierungselements (15); und
eine Steuerung (26), die konfiguriert ist, um die Druckentlastungsbeckenisolierventile (8), das Druckentlastungsbeckenwasserreinigungssystem-Pumpeneinlassventil (9) und das -auslassventil sowie das Auslassventil des Wärmetauschers zum Kühlen von Druckentlastungsbeckenwasser (5) zu öffnen und um das Brennelementlagerkühl- und -reinigungssystemleitungseinlassventil (14) und das -auslassventil zu schließen, wenn die Temperaturmessvorrichtung (25) misst, dass die Temperatur des Druckentlastungsbeckenwassers (4) sich der maximalen Gebrauchstemperatur des Druckentlastungsbeckens (3) genähert hat.

4. Kühlsystem nach einem der Ansprüche 1 bis 3,
wobei die Druckentlastungsbeckenwasserreinigungssystemansaugleitung (6) und die Druckentlastungsbeckenwasserreinigungssystemauslassleitung (20) zur Verwendung zum Zeitpunkt der Durchführung eines Leistungsüberprüfungstests der Druckentlastungsbeckenwasserreinigungssystempumpe (7) durch eine Druckentlastungsbeckenwasserreinigungssystemüberwachungsleitung (16) verbunden sind, und wobei
ein Druckentlastungsbeckenwasserreinigungssystemüberwachungsleitungsventil (12), das konfiguriert ist, um geschlossen zu sein, wenn der Wärmetauscher zum Kühlen von Druckentlastungsbeckenwasser (5) arbeitet, in der Mitte der Druckentlastungsbeckenwasserreinigungssystemüberwachungsleitung (16) bereitgestellt ist.

5. Kühlsystem nach einem der Ansprüche 1 bis 4,
wobei eine geschlossene Reaktorgebäude-Kühlwassersystemleitung (27) ein Kühlmittel zum Durchführen von Wärmeaustausch mit dem Druckentlastungsbeckenwasser (4) zum Kühlen mit dem Wärmetauscher zum Kühlen von Druckentlastungsbeckenwasser (5) verbunden ist, wobei
die geschlossene Reaktorgebäude-Kühlwassersystemleitung (27) eine geschlossene Reaktorgebäude-Kühlwassersystempumpe (21), einen geschlossenen Reaktorgebäude-Kühlwassersystemwärmetauscher (22) und einen geschlossenen Reaktorgebäude-Kühlwassersystemausgleichsbehälter (23) umfasst, und wobei
eine Reaktorwartungswassersystemleitung (24) zum Hinaufpumpen von Wartungswasser (29) durch eine Reaktorwartungswassersystempumpe (30) und zum Durchführen eines Wärmeaustauschs mit dem Kühlmittel durch den geschlossenen Reaktorgebäude-Kühlwassersystemwärmetauscher (22) zum Ablassen von Wärme auf das Wartungswasser (29) im geschlossenen Reaktorgebäude-Kühlwassersystemwärmetauscher (22) installiert ist.

6. Kühlsystem nach Anspruch 5, wobei eine alternative geschlossene Reaktorgebäude-Kühlwassereinheit (36) außerhalb eines Reaktorgebäudes, wenn sie im Gebrauch ist, mit der geschlossenen Reaktorgebäude-Kühlwassersystemleitung (27) verbunden ist, wobei
eine provisorische Wartungswasserpumpenausrüstung (37) mit der alternativen geschlossenen Reaktorgebäude-Kühlwassereinheit (36) verbunden ist, wobei
die alternative geschlossene Reaktorgebäude-Kühlwassereinheit (36) aus einer Leitung, die eine alternative geschlossene Reaktorgebäude-Kühlwasserpumpe (31), einem alternativen geschlossenen Reaktorgebäude-Kühlwasserwärmetauscher (32), einem die jeweiligen obigen Bestandteile und Ventile verbindendem Rohr ausgebildet ist, während die provisorische Wartungswasserpumpenausrüstung (37) aus einer Leitung ausgebildet ist, die eine provisorische Wartungswasserpumpe (33), ein provisorisches Sieb (34), ein die jeweiligen obigen Bestandteile und Ventile verbindendes Rohr umfasst, wobei
das Kühlmittel durch die alternative geschlossene Reaktorgebäude-Kühlwasserpumpe (31) aus der geschlossenen Reaktorgebäude-Kühlwassersystemleitung (27) in den alternativen geschlossenen Reaktorgebäude-Kühlwasserwärmetauscher (32) eingebracht wird, und wobei
die Konfiguration des Kühlsystems derart ist, dass das in den alternativen geschlossenen Reaktorgebäude-Kühlwasserwärmetauscher (32) eingebrachte Kühlmittel und das von der provisorischen Wartungswasserpumpe (33) hinaufgepumpte und über das provisorische Sieb (34) in den alternativen geschlossenen Reaktorgebäude-Kühlwasserwärmetauscher (32) eingebrachte Wartungswasser (29) einen Wärmeaustausch durchführen, wodurch die Wärme auf das Wartungswasser (29) abgelassen wird.

7. Kühlsystem nach einem der Ansprüche 1 bis 4, wobei ein Kühlturm-Kühlsystem, das aus einem außen installierten Kühlturm (41) zum Durchführen eines Wärmeaustauschs zwischen dem Druckentlastungsbeckenwasser (4) und einem im Wärmetauscher zum Kühlen von Druckentlastungsbeckenwasser (5) zirkulierenden Wasser, und einer Zirkulierpumpe (42) zum Zirkulieren des zirkulierenden Wassers in einer geschlossenen Schleife zwischen dem Kühlturm (41) und dem Wärmetauscher zum Kühlen von Druckentlastungsbeckenwasser (5) ausgebildet ist, mit dem Wärmetauscher zum Kühlen von Druckentlastungsbeckenwasser (5) verbunden ist, und wobei
die Konfiguration des Kühlsystems derart ist, dass das Druckentlastungsbeckenwasser (4) gekühlt wird, indem die Wärme des Druckentlastungsbeckenwassers (4) über das zirkulierende Wasser und den Kühlturm (41) in die Luft abgelassen wird.

8. Kühlsystem nach Anspruch 7,
wobei eine Zusatzwasserquelle (43) zum Zuführen von Zusatzwasser, das zu verdampfen ist, um einen Wärmeaustausch mit dem zirkulierenden Wasser durch latente Verdampfungswärme durch Verdampfen des Zusatzwassers durch den Kühlturm (41) durchzuführen, und eine Zusatzwasserpumpe (44) zum Zuführen des Zusatzwassers aus der Zusatzwasserquelle (43) zum Kühlturm (41) mit dem Kühlturm (41) verbunden sind.

9. Kühlsystem nach einem der Ansprüche 1 bis 4, wobei ein Luftlamellenkühlerkühlsystem, das aus einem außen installierten Luftlamellenkühler (51) zum Durchführen eines Wärmeaustauschs mit der Luft über das Druckentlastungsbeckenwasser (4) und ein im Wärmetauscher zirkulierendes Wasser zum Kühlen von Druckentlastungsbeckenwasser (5), und einer Zirkulierpumpe zum Zirkulieren des zirkulierenden Wassers in einer geschlossenen Schleife zwischen dem Luftlamellenkühler (51) und dem Wärmetauscher zum Kühlen von Druckentlastungsbeckenwasser (5) ausgebildet ist, mit dem Wärmetauscher zum Kühlen von Druckentlastungsbeckenwasser (5) verbunden ist, und wobei
die Konfiguration des Kühlsystems derart ist, dass das Druckentlastungsbeckenwasser (4) gekühlt wird, indem die Wärme des Druckentlastungsbeckenwassers (4) über das zirkulierende Wasser und den Luftlamellenkühler (51) in die Luft abgelassen wird.

## Revendications

1. Système de refroidissement pour refroidir l'eau de réserve d'eau de réduction de pression (4) stockée dans une réserve d'eau de réduction de pression (3) agencée dans une cuve de confinement de réacteur (1) dans laquelle un réacteur (2) est logé, le système de refroidissement comprenant :
une conduite d'aspiration de système de traitement d'eau de réserve d'eau de réduction de pression (6) pour aspirer l'eau de réserve d'eau de réduction de pression (4) de la réserve d'eau de réduction de pression (3) et pour permettre l'écoulement de l'eau ;
une pompe de système de traitement d'eau de réserve d'eau de réduction de pression (7) installée au milieu de la conduite d'aspiration de système de traitement d'eau de réserve d'eau de réduction de pression (6) ;
une conduite de système de refroidissement et de traitement d'eau des piscines (17), dont une extrémité est raccordée à la conduite d'aspiration de système de traitement d'eau de réserve d'eau de réduction de pression (6) ;
un déminéraliseur à filtration (15) installé au milieu de la conduite de refroidissement et de traitement d'eau des piscines (17) et configuré pour traiter l'eau de réserve d'eau de réduction de pression (4) qui s'écoule dans la conduite de système de refroidissement et de traitement d'eau des piscines (17) ;
une conduite de décharge de système de traitement d'eau de réserve d'eau de réduction de pression (20) raccordée à l'autre extrémité de la conduite de système de refroidissement et de traitement d'eau des piscines (17) pour ramener l'eau de réserve d'eau de réduction de pression (4) traitée par le déminéraliseur à filtration (15) vers la réserve d'eau de réduction de pression (3) ;
une conduite de refroidissement d'eau de réserve d'eau de réduction de pression (18) dont une extrémité est raccordée à une conduite faisant la connexion entre la conduite d'aspiration de système de traitement d'eau de réserve d'eau de réduction de pression (6) et la conduite de système de refroidissement et de traitement d'eau des piscines (17) sur un côté d'entrée dans le déminéraliseur à filtration (15) et dont l'autre extrémité est raccordée à une conduite faisant la connexion entre la conduite de système de refroidissement et de traitement d'eau des piscines (17) sur un côté de sortie vers le déminéraliseur à filtration (15) et la conduite de décharge de système de traitement d'eau de réserve d'eau de réduction de pression (20) ; et
un échangeur de chaleur pour refroidir l'eau de réserve d'eau de réduction de pression (5) installé au milieu de la conduite de refroidissement d'eau de réserve d'eau de réduction de pression (18), dans lequel l'échangeur de chaleur pour refroidir l'eau de réserve d'eau de réduction de pression (5) est configuré pour fonctionner lorsque la température de l'eau de réserve d'eau de réduction de pression (4) atteint une température donnée, pour réaliser l'échange de chaleur avec l'eau de réserve d'eau de réduction de pression (4) de la conduite d'aspiration de système de traitement d'eau de réserve d'eau de réduction de pression (6) pour refroidir l'eau, et pour ramener l'eau de réserve d'eau de réduction de pression (4) refroidie à la réserve d'eau de réduction de pression (3) en passant par la conduite de décharge de système de traitement d'eau de réserve d'eau de réduction de pression (20).

2. Système de refroidissement selon la revendication 1, comprenant en outre :
un dispositif de mesure de température (25) pour mesurer la température de l'eau de réserve d'eau de réduction de pression (4),
dans lequel l'échangeur de chaleur pour refroidir l'eau de réserve d'eau de réduction de pression (5) est configuré pour fonctionner lorsque le dispositif de mesure de température (25) mesure que la température de l'eau de réserve d'eau de réduction de pression (4) a atteint une valeur proche de la température d'utilisation maximale de la réserve d'eau de réduction de pression (3).

3. Système de refroidissement selon la revendication 2, comprenant en outre :
des valves d'isolation de réserve d'eau de réduction de pression (8) dans la conduite d'aspiration de système de traitement d'eau de réserve d'eau de réduction de pression (6) et la conduite de décharge de système de traitement d'eau de réserve d'eau de réduction de pression (20) ;
une valve d'entrée de pompe de système de traitement d'eau de réserve d'eau de réduction de pression (9) et une valve de sortie de pompe de système de traitement d'eau de réserve d'eau de réduction de pression (10) sur un côté d'entrée et un côté de sortie de la pompe de système de traitement d'eau de réserve d'eau de réduction de pression (7) ;
une valve de sortie de l'échangeur de chaleur pour refroidir l'eau de réserve d'eau de réduction de pression (5) sur la conduite de refroidissement d'eau de réserve d'eau de réduction de pression (18) sur un côté de sortie de l'échangeur de chaleur pour refroidir l'eau de réserve d'eau de réduction de pression (5) ;
une valve d'entrée de conduite de système de refroidissement et de traitement de l'eau des piscines (14) et une valve de sortie de conduite de système de refroidissement et de traitement de l'eau des piscines (19) dans la conduite de système de refroidissement et de traitement de l'eau des piscines (17) sur le côté d'entrée et le côté de sortie du déminéraliseur à filtration (15) ; et
un organe de commande (26) configuré pour ouvrir les valves d'isolation de réserve d'eau de réduction de pression (8), la valve d'entrée de pompe de système de traitement d'eau de réserve d'eau de réduction de pression (9) et la valve de sortie et la valve de sortie de l'échangeur de chaleur pour refroidir l'eau de réserve d'eau de réduction de pression (5) et pour fermer la valve d'entrée de conduite de système de refroidissement et de traitement d'eau des piscines (14) et la valve de sortie lorsque le dispositif de mesure de température (25) mesure que la température de l'eau de réserve d'eau de réduction de pression (4) a atteint une valeur proche de la température d'utilisation maximale de la réserve d'eau de réduction de pression (3).

4. Système de refroidissement selon l'une quelconque des revendications 1 à 3,
dans lequel la conduite d'aspiration de système de traitement d'eau de réserve d'eau de réduction de pression (6) et la conduite de décharge de système de traitement d'eau de réserve d'eau de réduction de pression (20) sont raccordées par une conduite de surveillance de système de traitement d'eau de réserve d'eau de réduction de pression (16) pour être utilisées au moment de la réalisation d'un test de validation de performance de la pompe de système de traitement d'eau de réserve d'eau de réduction de pression (7), et
une valve de conduite de surveillance de système de traitement d'eau de réserve d'eau de réduction de pression (12) qui est configurée pour être fermée lorsque l'échangeur de chaleur pour refroidir l'eau de réserve d'eau de réduction de pression (5) fonctionne, est prévue au milieu de la conduite de surveillance de système de traitement d'eau de réserve d'eau de réduction de pression (16) .

5. Système de refroidissement selon l'une quelconque des revendications 1 à 4,
dans lequel une conduite de système d'eau de refroidissement fermée de bâtiment réacteur (27) fournissant un réfrigérant pour réaliser l'échange de chaleur avec l'eau de réserve d'eau de réduction de pression (4) pour le refroidissement, est raccordée à l'échangeur de chaleur pour refroidir l'eau de réserve d'eau de réduction de pression (5),
la conduite de système d'eau de refroidissement fermée de bâtiment réacteur (27) comprend une pompe de système d'eau de refroidissement fermée de bâtiment réacteur (21), un échangeur de chaleur de système d'eau de refroidissement fermé de bâtiment réacteur (22) et un réservoir tampon de système d'eau de refroidissement fermé de bâtiment réacteur (23), et
une conduite de système d'eau de circulation de réacteur (24) pour pomper une eau de circulation (29) par une pompe de système d'eau de circulation de réacteur (30) et pour réaliser l'échange de chaleur avec le réfrigérant par l'échangeur de chaleur de système d'eau de refroidissement fermé de bâtiment réacteur (22) pour évacuer la chaleur vers l'eau de circulation (29), est installée dans l'échangeur de chaleur de système d'eau de refroidissement fermé de bâtiment réacteur (22).

6. Système de refroidissement selon la revendication 5,
dans lequel l'unité d'eau de refroidissement fermée de bâtiment réacteur en variante (36), à l'extérieur d'un bâtiment réacteur (50) lorsqu'il est en fonctionnement, est raccordée à la conduite de système d'eau de refroidissement fermée de bâtiment réacteur (27),
un équipement de pompe à eau de circulation provisoire (37) est raccordé à l'unité d'eau de refroidissement fermée de bâtiment réacteur (36),
l'unité d'eau de refroidissement fermée de bâtiment réacteur en variante (36) est formée avec une conduite comprenant la pompe à eau de refroidissement fermée de bâtiment réacteur en variante (31), un échangeur de chaleur d'eau de refroidissement fermé de bâtiment réacteur en variante (32), un tuyau raccordant les composants et valves respectifs ci-dessus, alors que l'équipement de pompe à eau de circulation provisoire (37) est formé avec une conduite comprenant une pompe à eau de circulation provisoire (33), une crépine provisoire (34), un tuyau raccordant les composants et valves respectifs ci-dessus,
le réfrigérant de la conduite de système d'eau de refroidissement fermée de bâtiment réacteur (27) est introduit dans l'échangeur de chaleur d'eau de refroidissement fermé de bâtiment réacteur (32) par la pompe à eau de refroidissement fermée de bâtiment de réacteur en variante (31), et
la configuration du système de refroidissement est telle que le réfrigérant introduit dans l'échangeur de chaleur d'eau de refroidissement fermé de bâtiment réacteur en variante (32) et l'eau de circulation (29) pompée par la pompe à eau de circulation provisoire (33) et introduite dans l'échangeur de chaleur d'eau de refroidissement fermé de bâtiment réacteur en variante (32) par la crépine provisoire (34) réalisent l'échange de chaleur, évacuant ainsi la chaleur vers l'eau de circulation (29).

7. Système de refroidissement selon l'une quelconque des revendications 1 à 4,
dans lequel le système de refroidissement de tour de refroidissement qui est raccordé à l'échangeur de chaleur pour refroidir l'eau de réserve d'eau de réduction de pression (5), est formé avec une tour de refroidissement (41) installée à l'extérieur pour réaliser l'échange de chaleur entre l'eau de réserve d'eau de réduction de pression (4) et une eau de circulation dans l'échangeur de chaleur pour refroidir l'eau de réserve d'eau de réduction de pression (5), et une pompe de circulation (42) pour faire circuler l'eau de circulation dans une boucle fermée entre la tour de refroidissement (41) et l'échangeur de chaleur pour refroidir l'eau de réserve d'eau de réduction de pression (5), et
la configuration du système de refroidissement est telle que l'eau de réserve d'eau de réduction de pression (4) est refroidie au fur et à mesure que la chaleur de l'eau de réserve d'eau de réduction de pression (4) est déchargée dans l'air par le biais de l'eau de circulation et de la tour de refroidissement (41).

8. Système de refroidissement selon la revendication 7,
dans lequel une source d'eau d'appoint (43) pour fournir l'eau d'appoint à vaporiser pour réaliser l'échange de chaleur avec l'eau de circulation par la chaleur latente de vaporisation en vaporisant l'eau d'appoint par la tour de refroidissement (41), et une pompe à eau d'appoint (44) pour alimenter l'eau d'appoint de la source d'eau d'appoint (43) à la tour de refroidissement (41), sont raccordées à la tour de refroidissement (41).

9. Système de refroidissement selon l'une quelconque des revendications 1 à 4,
dans lequel un système de refroidissement de refroidisseur d'air à ailettes qui est raccordé à l'échangeur de chaleur pour refroidir l'eau de réserve d'eau de réduction de pression (5), est formé avec un refroidisseur d'air à ailettes (51) installé à l'extérieur pour réaliser l'échange de chaleur avec l'air par le biais de l'eau de réserve d'eau de réduction de pression (4) et une eau de circulation dans l'échangeur de chaleur pour refroidir l'eau de réserve d'eau de réduction de pression (5), et une pompe de circulation pour faire circuler l'eau de circulation dans une boucle fermée entre le refroidisseur d'air à ailettes (51) et l'échangeur de chaleur pour refroidir l'eau de réserve d'eau de réduction de pression (5), et
la configuration du système de refroidissement est telle que l'eau de réserve d'eau de réduction de pression (4) est refroidie au fur et à mesure que la chaleur de l'eau de réserve d'eau de réduction de pression (4) est déchargée dans l'air par le biais de l'eau de circulation et du refroidisseur d'air à ailettes (51).
